# EUROPÄISCHE PATENTANMELDUNG

(11) **EP 0 529 472 A1**
(43) Veröffentlichungstag der Anmeldung: **03.03.1993**
(21) Anmeldenummer: 92114036.4
(22) Anmeldetag: 18.08.1992
(51) Int. Cl.: F16H 57/04, F16N 13/20, F04C 2/356

(54) **Schmiervorrichtung für angetriebene Fahrzeugachsen**

(30) Priorität: 23.08.1991 DE 4128049; 23.05.1992 DE 4217217
(71) Anmelder: Iveco Magirus Aktiengesellschaft, D-89017 Ulm (DE)
(72) Erfinder: Nobis, Dieter, W-7909 Scharenstetten (DE)
(74) Vertreter: TER MEER - MÜLLER - STEINMEISTER & PARTNER

(57) **Zusammenfassung**

2.1. Bei einer bekannten Längsdifferential-Schmiervorrichtung erfolgt eine Schmiermittelförderung radial nach innen in Richtung des Drehzentrums des Getriebes mittels Druckkeilförderung durch Adhäsion und Verdichtung.

2.2. Erfindungsgemäß wird für eine Schmiermittelförderung radial nach innen in Richtung des Drehzentrums (24) einer Schmiervorrichtung (1) für das Getriebe angetriebener Fahrzeugachsen (21, 22) eine Schmiermittel-Förderpumpe (3) nach Art einer Rollkolbenpumpe vorgeschlagen, deren exzentrischer Rollkolben hohl ist und eine radiale Durchgangsbohrung (5) aufweist, wobei der Außenumfang des Rollkolbens (4) mit einem Sperrschieber in einem Abdichtungseingriff steht. Dadurch wird ein definierter Pumpeffekt über den gesamten Drehzahlbereich mit einfachen Mitteln erreicht, der eine ausreichende Versorgung der einzelnen Schmierstellen garantiert.

## Beschreibung

Die Erfindung betrifft eine Schmiervorrichtung für das Getriebe angetriebener Fahrzeugachsen, insbesondere für ein Längsdifferential einer angetriebenen Tandemachse, mit einer Schmiermittelförderung radial nach innen in Richtung des Drehzentrums des Getrieberotors bzw. Achswellenrades und von dort zu den einzelnen Schmierstellen des Getriebes.

Bei einem aus DE-A-37 43 671 bekannten Längsdifferential für die Tandemachse eines Fahrzeugs erfolgt die Schmierung mit Spritz- oder Tropföl über einen separaten Ölsumpf. Hierfür ist ein feststehendes Gehäuse mit einem eigenen, hochgelegenen Ölsumpf vorgesehen, in das das offene, rotierende Differentialgetriebe eintaucht. Im Betrieb ergeben sich hohe Planschverluste, ein geringer Leistungsdurchsatz sowie eine starke Erwärmung, die letztlich einen hohen Verschleiß bedingen. Insbesondere werden die Schmierstellen im nahen Bereich des Rotationszentrums nicht zufriedenstellend mit Öl versorgt.

In Verbesserung des vorgenannten Stands der Technik ist gemäß DE 39 36 148 A1 eine Schmiermittelförderung radial nach innen in Richtung des Drehzentrums des Getrieberotors dergestalt vorgesehen, daß das im Getriebegehäuse aufgefangene Schmiermittel durch Druckkeilförderung auf ein Rotationsniveau nahe dem Zentrum des Getriebes gebracht und von dort im kontinuierlichen Durchfluß praktisch allen Schmierstellen des Getriebes zugeführt wird. Der Pumpeffekt radial nach innen erfolgt also über Adhäsion in Verbindung mit einer Verdichtung das Schmiermittelmediums. Von Nachteil ist, daß nur ein geringes Schmiermittelfördervolumen nur bis zu einer bestimmten Drehzahl radial einwärts zum Drehzentrum des Getriebes gefördert werden kann. Der Förderstrom ist also durch die zunehmend steigende Fliehkraft begrenzt, die auf das Schmiermittel bzw. die Ölteilchen einwirkt.

Aufgabe der Erfindung ist die Schaffung einer Schmiervorrichtung der eingangs genannten Art, die mit einfachem konstruktiven Aufwand ein vergleichsweise großes Schmiermittelvolumen auch bei erhöhter Drehzahl entgegen der Fliehkraft radial einwärts fördern kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 7.

Wesen der Erfindung ist, die Schmiervorrichtung für das Getriebe angetriebener Fahrzeugachsen mit einer Schmiermittel-Förderpumpe nach Art einer Rollkolbenpumpe vorzusehen, deren sichelförmiger Arbeitsraum radial nach außen geschlossen und deren exzentrischer Rollkolben hohl ist und eine radiale Durchgangsbohrung aufweist.

Die Schmiermittel-Förderpumpe ist insbesondere mit der zentralen Motor- bzw. Getriebeantriebsachse bzw. dem Getrieberotor integriert ausgebildet, wobei am Getrieberotor koaxial der exzentrische Rollkolben der Pumpe befestigt und der Innenumfang des Arbeitsraums der Pumpe durch ein koaxiales Getriebegehäuseteil gebildet ist.

Eine besonders kompakte Anordnung ist gegeben, wenn der kreisrunde Rollkolben einstückig am Achswellen(kegel)rad ausgebildet ist, und zwar im Axialbereich des vorgenannten (koaxialen) Getriebegehäuseteils, in welchem der Arbeitsraum der Pumpe gelegen ist.

In alternativer Weise kann der Rollkolben ein separates Bauteil in Form eines Rundrings sein, der exzentrisch am Achswellenkegelrad befestigt ist.

Der Arbeitsraum der pumpe ist über eine Schmiermittel-Zufuhröffnung mit einer eingangsseitigen wannenförmigen Ausformung des Getriebegehäuses verbunden, in welche im Betrieb der Schmiermittelvorrichtung das Schmiermittel bzw. Spritzöl durch das in einen Schmiermittelsumpf eintauchende Getriebetellerrad hineingeschleudert wird.

Der Sperrschieber ist getriebefest am Getriebegehäuseteil befestigt und in radialer Richtung verschieblich sowie in Richtung Rollkolben mittels einer Feder vorgespannt.

Das Innere des hohlen Rollkolbens steht in einer Schmiermittelverbindung zu den einzelnen Schmiermittelstellen des Getriebes.

Durch die Erfindung wird also mit einfachem konstruktiven Aufwand ein definierter Pumpeffekt radial einwärts in Richtung des Drehzentrums einer Getriebeachse erreicht. Der definierte Pumpeffekt ist vergleichsweise groß und versorgt praktisch alle Schmierstellen des Getriebes in ausreichender Weise, und zwar auch bei erhöhten Drehzahlen des Getriebes. Die "Rollkolbenpumpe" ist vergleichsweise kompakt an geeigneter Stelle im Getriebe integriert.

Eine "Rollkolbenpumpe" im Sinne der Erfindung ist auch nicht aus US-A-2 991 931, GB-A-560 455, US-A-3 441 106 sowie EP-A-0 373 495 bekannt oder nahegelegt. Die Vorrichtungen nach US-A-2 991 931 und GB-A-560 455 besitzen keinen vollständig hohl ausgebildeten Drehkolben mit definierter, jederzeit ausreichender Schmiermittelversorgung durch das Differentialgetriebe. Vielmehr besitzen diese Vorrichtungen einen Drehkolben mit kleinen Durchgangsbohrungen. US-A-3 441 106 betrifft ebenfalls keine Rollkolbenpumpe, vielmehr eine Schmiermittelversorgung zu einer exzentrischen Pumpe. Auch ist die in EP-A-0 373 495 angesprochene Druckkeil-Schmiermittelförderung nicht mit einer Schmiermittelförderung mittels einer Rollkolbenpumpe vergleichbar.

Die Erfindung wird nachfolgend anhand eines Ausführungsbeispiels unter Bezugnahme auf die beigefügte Zeichnung näher erläutert; es zeigt:
- Fig. 1: ein Längsdifferentialgetriebe einer angetriebenen Tandemachse im Bereich der ersten Achse in einem Axialschnitt,
- Fig. 2: eine Schmiermittel-Förderpumpe in einem schematischen Querschnitt längs der Linie A-A der Fig.1,
- Fig. 3, 4 und 5: die Schmiermittel-Förderpumpe nach Fig.2 in weiteren Betriebsstellungen.

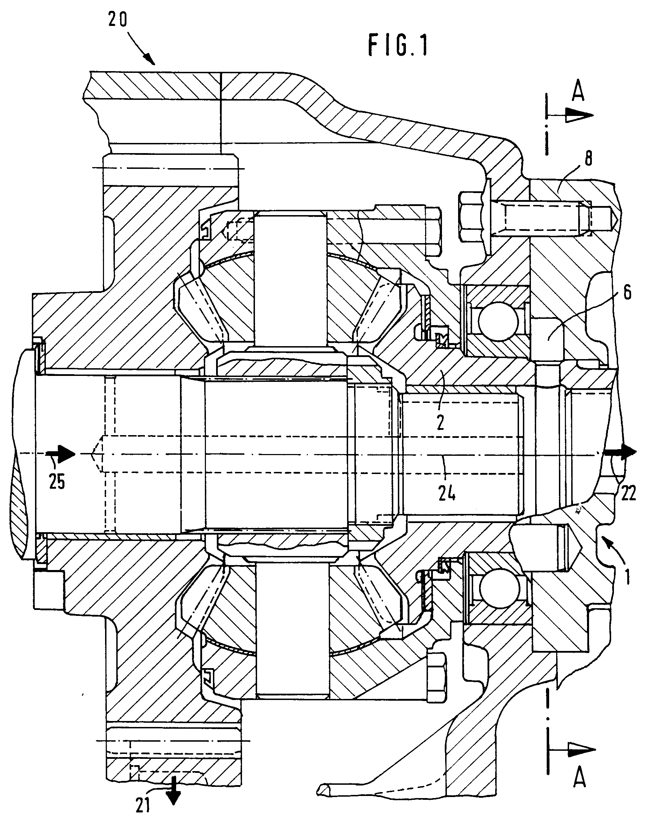

Gemäß Fig. 1 ist ein Ausschnitt eines Längsdifferentialgetriebes (20) einer Tandemachse eines Fahrzeugs dargestellt. Ein derartiges Getriebe hat die Aufgabe, das vom Motor bzw. Getriebe (25) kommende Drehmoment auf zwei angetriebene Fahrzeugachsen aufzuteilen, beispielsweise auf die erste Hinterachse (21) und die zweite Hinterachse (22) eines Fahrzeugs.

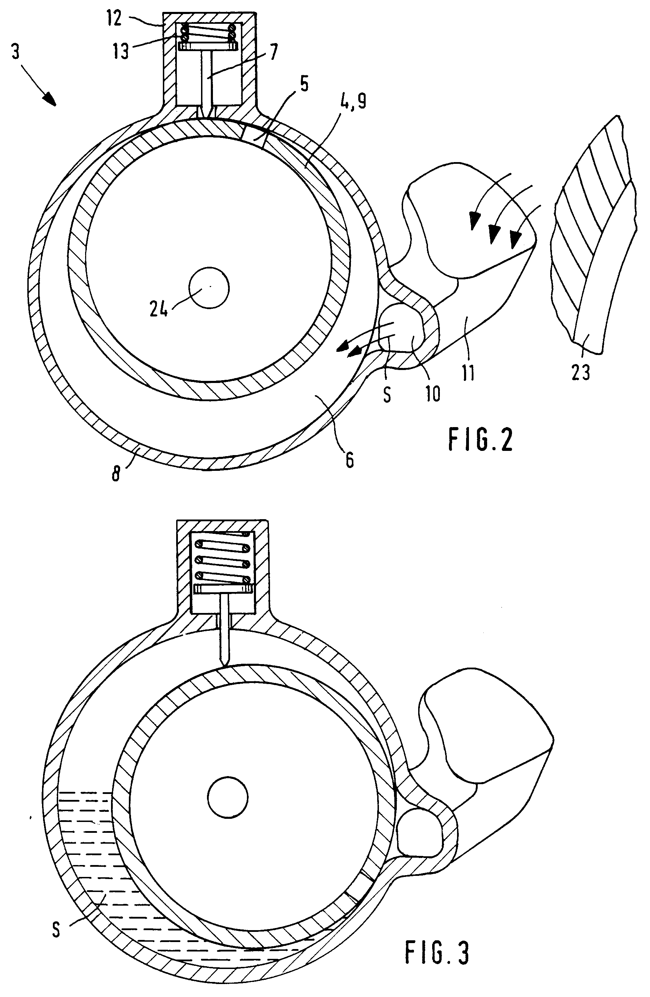

Von einem Tellerrad 23 gemäß Fig. 2,welches in einen (nicht veranschaulichten) Schmiermittelsumpf eintaucht, wird Schmiermittel bzw. Schmieröl aufgenommen und in eine wannenförmige Ausformung (11) des Getriebegehäuses geschleudert. Das Schmiermittel (S) strömt über eine Zufuhröffnung (10) in einen Arbeitsraum (6) der Schmiervorrichtung (1), wie dies in Fig.2 dargestellt ist.

Die Schmiervorrichtung (1) besteht insbesondere aus einer Schmiermittel-Förderpumpe (3) nach Art einer Rollkolbenpumpe, wobei der Arbeitsraum (6) der Pumpe (mit Ausnahme der Zufuhröffnung (10)) radial nach außen geschlossen ist. Im Innern des Arbeitsraums (6) befindet sich ein kreisrunder hohler Rollkolben (4) in Form eines Rundrings (9), welcher eine radiale Durchgangsöffnung (5) besitzt.

Insbesondere ist die Schmiermittel-Förderpumpe (3) mit der zentralen Motor- bzw. Getriebeantriebswelle integriert ausgebildet, wobei an der Achswelle bzw. dem Getrieberotor (2) im Bereich des Achswellenkegelrades der exzentrische Rollkolben (4) befestigt ist. Das Drehzentrum (24) des Rollkolbens (4) ist identisch mit dem Getrieberotor (2) bzw. dem Achswellenkegelrad. Bei einem Antrieb der zentralen Motor- bzw. Getriebeantriebsachse wird auch der exzentrisch angelenkte Rollkolben gemäß den Fig. 2 bis 5 im Uhrzeigersinn gedreht. Das kreisrunde Innere des Arbeitsraums (6) der Rollkolbenpumpe verläuft koaxial zum Achswellenrad bzw. Getrieberotor (2) und steht im Bereich der größten Exzentrizität des Rollkolbens (4) mit diesem in einem paßgenauen Abdichtungseingriff.

Das Getriebegehäuseteil (8) mit dem integrierten Arbeitsraum (6) einschließlich integrierter wannenförmiger Ausformung (11) besitzt ferner eine zylindrische Anformung (12) gemäß Fig. 2, in welcher ein radial verschieblicher Sperrschieber (3) verschieblich aufgenommen und durch die Kraft einer Feder in Richtung Außenumfang des Rollkolbens (4) in eine schleifenden Abdichtungseingriff vorgespannt ist. Der Sperrschieber (7) ist bezüglich der radialen Durchgangsbohrung (5) axial breiter. Das Innere des Rollkolbens (4) steht in einer Schmiermittelverbindung zu den einzelnen Schmiermittelstellen des Getriebes.

Im Betrieb der Schmiervorrichtung (1) gemäß Fig. 2 wird bei Drehung des Rollkolbens (4) im Uhrzeigersinn durch die Kraft der Antriebsachse die radiale Durchgangsbohrung (5) über den Eintrittsbereich der Schmiermittel-Zufuhröffnung (10) gemäß Fig. 3 gedreht. In dieser Stellung entsteht ein im wesentlichen sichelförmiger Arbeitsraum (6) einer Rollkolbenpumpe, der in Fig. 3 durch das Schmiermittel (S) links dargestellt ist, einschließlich des im wesentlichen sichelförmigen Raumes oberhalb des Niveaus des Schmiermittels (S) im Arbeitsraum (6).

An oberster Stelle wird der geschlossene Arbeitsraum (6) durch den Sperrschieber (7) begrenzt.

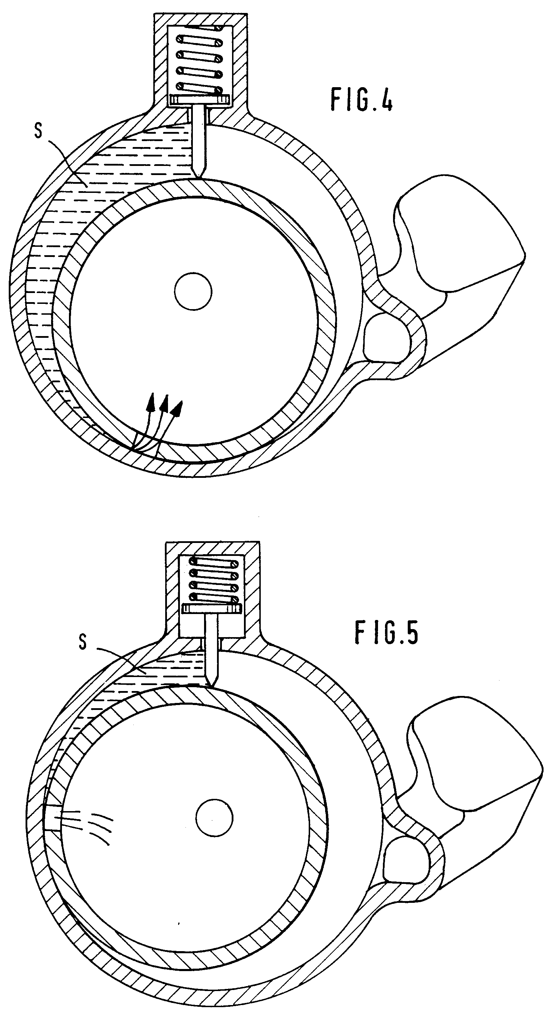

Bei einem Weiterdrehen des Rollkolbens (4) im Uhrzeigersinn gemäß Fig. 4 wird der sichelförmige Arbeitsraum (6) der Schmiermittel-Förderpumpe (3) kontinuierlich verkleinert und das darin befindliche Schmiermittel (S), insbesondere Öl, durch die radiale Durchgangsbohrung (5) in das Innere des Rollkolbens (4) gedrückt, da die Dichtkante des Sperrschiebers (7) den Arbeitsraum (6) abschließt.

Das in den Innenraum gedrückte Schmiermittel bzw. Öl wird über an sich bekannte Axial- bzw. Radialbohrungen ins eigentliche Differential und zu den einzelnen Schmierstellen auf der Welle gedrückt.

Nach einem Passieren des Sperrschiebers (7), welcher eine größere Axialerstreckung besitzt als die Durchgangsöffnung (5), gelangt der Rollkolben (4) mit seiner Durchgangsöffnung (5) in die in Fig. 2 gezeigte Stellung. Das Schmiermittel vom Tellerrad (23) gelangt über die wannenförmige Ausformung des Gehäuses wieder drucklos in den Ringraum, bis wieder der abgedichtete im wesentlichen sichelförmige Arbeitsraum (6) gemäß Fig. 3 eingerichtet ist. Der beschriebene Vorgang wiederholt sich fortlaufend und erzeugt so einen kontinuierlichen Schmiermittel- bzw. Ölfluß.

Die Erfindung eignet sich nicht nur bei einer Schmiervorrichtung eines Getriebes angetriebener Achsen, sondern allgemein für eine Schmierung von Lagerstellen, Verzahnungen bei Achsantrieben oder dergl., wo das Schmiermittel über rotierende Teile zu den Schmierstellen geleitet werden muß.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Patentansprüche

1. Schmiervorrichtung (1) für das Getriebe angetriebener Fahrzeugachsen, insbesondere für ein Längsdifferential (20) einer angetriebenen Tandemachse (21, 22), mit einer Schmiermittelförderung radial nach innen in Richtung des Drehzentrums (24) des Getrieberotors bzw. Achswellenrades (2) und von dort zu den einzelnen Schmierstellen des Getriebes,
dadurch gekennzeichnet,
daß eine Schmiermittel-Förderpumpe (3) nach Art einer Rollkolbenpumpe vorgesehen ist, deren sichelförmiger Arbeitsraum (6) radial nach außen geschlossen und deren exzentrischer Rollkolben (4) hohl ist und eine radiale Durchgangsbohrung (5) aufweist, wobei der Außenumfang des Rollkolbens (4) mit einem Sperrschieber (7) in einem Abdichtungseingriff steht.

2. Schmiervorrichtung nach Anspruch 1,
dadurch gekennzeichnet,
daß die Schmiermittel-Förderpumpe (3) mit der zentralen Motor- bzw. Getriebeantriebsachse integriert ausgebildet ist, wobei am Getrieberotor (2) koaxial der exzentrische Rollkolben (4) der Pumpe befestigt und der Innenumfang des Arbeitsraums (6) der Pumpe durch ein koaxiales Getriebegehäuseteil (8) gebildet ist.

3. Schmiervorrichtung nach Anspruch 2,
dadurch gekennzeichnet,
daß der Rollkolben (4) einstückig mit dem Getrieberotor bzw. Achswellenrad (2) ausgebildet ist.

4. Schmiervorrichtung nach Anspruch 2,
dadurch gekennzeichnet,
daß der Rollkolben (4) ein Rundring (9) ist, der exzentrisch am Achswellenrad (2) befestigt ist.

5. Schmiervorrichtung nach einem der Ansprüche 2 bis 4, dadurch gekennzeichnet, daß der Arbeitsraum (6) der Pumpe über eine Schmiermittel-Zufuhröffnung (10) mit einer wannenförmigen Ausformung (11) des Getriebegehäuses verbunden ist, in welche im Betrieb der Vorrichtung das Schmiermittel (S) bzw. Spritzöl durch ein in einen Schmiermittelsumpf eintauchendes Tellerrad hineingeschleudert wird.

6. Schmiervorrichtung nach einem der Ansprüche 1 bis 5, dadurch gekennzeichnet, daß der Sperrschieber (7) am Getriebegehäuseteil (8) radial verschieblich befestigt und in Richtung Rollkolben (4) federvorgespannt ist.

7. Schmiervorrichtung nach einem der Ansprüche 1 bis 6,
dadurch gekennzeichnet,
daß das Innere des hohlen Rollkolbens (4) in einer Schmiermittelverbindung zu den einzelnen Schmiermittelstellen des Getriebes steht.
